# EUROPÄISCHE PATENTSCHRIFT

(11) **EP 1 256 699 B1**
(45) Veröffentlichungstag und Bekanntmachung des Hinweises auf die Patenterteilung: **10.08.2005**
(21) Anmeldenummer: 02006058.8
(22) Anmeldetag: 16.03.2002
(51) Int. Cl.: F01N 3/023, F01N 3/027, F01N 9/00

(54) **Vorrichtung zur Abgasbehandlung einer Brennkraftmaschine**
Device for the exhaust treatment in an internal combustion engine
Dispositif de traitement des gaz d'échappement d'un moteur à combustion interne

(30) Priorität: 10.05.2001 DE 10122739
(43) Veröffentlichungstag der Anmeldung: 13.11.2002
(73) Patentinhaber: ROBERT BOSCH GMBH, 70442 Stuttgart (DE)
(72) Erfinder: Breuer, Norbert, Dr., 71254 Ditzingen (DE)

(56) Entgegenhaltungen:
- EP-A- 0 383 187
- WO-A-93/13303
- DE-A- 3 015 976
- DE-A- 3 929 303
- US-A- 5 458 673
- US-A- 5 551 971

## Beschreibung

Die Erfindung betrifft eine Vorrichtung zur Abgasbehandlung einer Verbrennungseinrichtung nach dem Oberbegriff des Anspruchs 1.

### Stand der Technik

Entsprechend dem fortschreitenden Kenntnisstand werden zum Schutz der Gesundheit und der Umwelt gesetzliche Vorgaben, die die Emissionen von Kraftfahrzeugen oder anderen Verbrennungsgeräten regeln, ständig verschärft. Zur Erfüllung dieser Vorgaben werden beispielsweise, neben der Verwendung von entsprechend modifizierten Treibstoffen, feste Partikel mittels Filter aus dem Abgas entfernt.

Besonders Dieselantriebe bzw. -motoren produzieren große Mengen Ruß, wobei der Verdacht besteht, dass Dieselabgase eine Krebs erzeugende Potenz besitzen. So wurden bereits viele Anordnungen zur Behandlung von Dieselabgas vorgeschlagen. Im Allgemeinen bestehen diese Anordnungen aus Filtersystemen, die die partikulären Inhaltsstoffe zurückhalten. Ein effizienter Filter hält hierbei Rußpartikel, die insbesondere einen Durchmesser von ca. 10 bis 5000 Nanometern aufweisen, wirkungsvoll zurück.

Die von entsprechenden Filtern zurückgehaltenen Teilchen verursachen jedoch durch Belegung des Filters beziehungsweise seiner Oberfläche eine Verringerung des Gasdurchsatzes und bewirken hierdurch einen Anstieg des Filtrationswiderstandes, was detektiert und zur Einleitung einer Regenerationsphase verwendet werden kann.

Eine Regeneration des Filters erfolgt im Allgemeinen durch eine nahezu rückstandsfreie Verbrennung bzw. Oxidation des gespeicherten bzw. abgelagerten Rußes mittels Luftsauerstoff oder durch den Sauerstoff bzw. Stickoxide im Abgas. Die im Dieselabgas vorhandenen Temperaturen von ca. 200°C reichen hierzu in aller Regel nicht aus, so dass zusätzliche Systemhilfen bereitgestellt werden müssen.

So ist aus der EP 383 187 ein Regenerierungssystem für Dieselpartikelfilter bekannt, bei dem auf elektrischem Wege der Partikelfilter auf eine vorbestimmte Zündtemperatur der abgelagerten Partikel erhitzt wird. Dabei wird die Aufheizrate innerhalb des Filters mit Hilfe eines Temperatursensors verfolgt und gegebenenfalls zu Kühlung des Filters ein Luftstrom dem Abgas zugeführt.

Ohne zusätzliche Maßnahmen oxidiert der Ruß ab ca. 550 bis 600°C. Durch Kombination des Russfilters mit einem Oxidationskatalysator, durch katalytische Beschichtung des Filters und/oder durch geeignete Treibstoffadditive lässt sich die untere Temperaturschwelle für die Russoxidation auf ca. 250 bis 350°C absenken. Jedoch liegen diese Temperaturen für moderne Motoren immer noch oberhalb üblicher Abgastemperaturen, so dass temperatursteigernde Maßnahmen zur sicheren Filterregeneration notwendig sind.

Zur Steigerung der Abgastemperatur werden bislang beispielsweise elektrische Zuheizungen, Mikrowellenheizungen, Wärmetauscher oder innermotorische Maßnahmen vorgesehen.

Nachteilig bei bisherigen Filtersystemen ist jedoch, dass nach Überschreiten der für die Russoxidation charakteristischen Zündtemperatur es zu einer selbständigen Verstärkung der Reaktion kommen kann. Dies führt zu einer deutlichen Temperaturerhöhung des Filters, wobei diese Temperaturbelastung zur irreversiblen Schädigung der Filterstruktur bzw. zum so genannten Durchbrennen des Filters führen kann.

Weiterhin ist nachteilig, dass der bei der Regeneration ablaufende Abbrand des Rußes im Fall von häufig anzutreffenden inhomogenen Filterbeladungen zu räumlichen Temperaturgradienten im Filtermedium führen kann, die aufgrund der thermischen Längenausdehnung zu mechanischen Spannungen und gegebenenfalls in der Folge zu Brüchen bzw. Rissen im Filtermedium, beispielsweise der Keramik, führen können.

### Aufgabe und Vorteile der Erfindung

Aufgabe der Erfindung ist es demgemäß, eine Vorrichtung zur Abgasbehandlung einer Verbrennungseinrichtung, insbesondere einer Dieselbrennkraftmaschine, mit wenigstens einer Heizvorrichtung zur Erwärmung eines Partikelfilters, wobei eine chemische Regeneration des Partikelfilters vorgesehen ist, vorzuschlagen, die einerseits eine sichere Regeneration des Filters gewährleistet und andererseits vergleichsweise große Temperaturbelastungen des Partikelfilters vermeidet.

Diese Aufgabe wird, ausgehend von einer Vorrichtung der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass eine Regeleinheit zur Regelung einer Ist-Temperatur des Partikelfilters wenigstens während der Regeneration vorgesehen ist.

Die erfindungsgemäße Regeleinheit kann vorteilhafterweise die Ist-Temperatur des Partikelfilters wenigstens während der Regenerationsphase nahezu exakt auf eine vorgegebene Soll-Temperatur einregeln. Hier ist insbesondere darauf zu achten, dass die Ist-Temperatur des Partikelfilters eine vergleichsweise große thermische Belastung des Filters verhindert. Beispielsweise können Temperaturspitzen des Filters und/oder relativ große Temperaturunterschiede innerhalb des Filters reduziert bzw. vollständig beseitig werden.

Vorzugsweise kann der Partikelfilter mittels einer Heizvorrichtung zum Erreichen der Ist-Temperatur erwärmt werden. In vorteilhafter Weise kann hierfür die bereits vorhandene Heizvorrichtung bzw. Systemhilfe zur Erhöhung der Abgastemperatur und/oder eine zusätzliche, zweite Heizvorrichtung verwendet werden.

Gegebenenfalls kann zur Regelung der Ist-Temperatur eine Kühlvorrichtung verwendet werden, z.B. kann ein Kühlmedium wie Wasser, atmosphärische Luft oder dergleichen zum Kühlen des Filters verwendet werden. Grundsätzlich kann eine Kühlflüssigkeit, beispielsweise in den Abgasstrom zum Verdampfen eingebracht und/oder im Mantelbereich des Partikelfilters u.a. mittels einer Wärmetauschereinheit den Partikelfilter kühlen. Ebenso kann in vorteilhafter Weise atmosphärische kühle Luft den Partikelfilter umströmen, so dass dieser gekühlt wird.

In einer besonderen Weiterbildung der Erfindung ist die Ist-Temperatur kleiner als eine Zündtemperatur der Vorrichtung. Hierbei stellt die Zündtemperatur insbesondere die Temperatur dar, bei der die Reaktionsgeschwindigkeit der Regeneration so groß ist, dass genau die Menge an Wärme freigesetzt wird, die zum Aufrechterhalten einer konstanten Temperatur in der Reaktionszone benötigt wird. Das heißt, dass hierbei die Menge an durch die Regeneration freigesetzter Energie gleich einer Menge an durch Konvektion, Strahlung und Wärmeleitung abgegebener Energie der Vorrichtung ist. Demzufolge ist die Zündtemperatur eine Funktion des Gesamtsystems und hängt insbesondere von der Art des Rußes, Reaktionskinetik, Gasgeschwindigkeit, Gaseintrittstemperatur, Wärmekapazität, Wärmeleitfähigkeit, usw. ab.

Oberhalb der Zündtemperatur wird folglich mehr Wärme freigesetzt als zur unmittelbaren Aufrechterhaltung der Regenerationsreaktion notwendig ist. So steigt die Reaktionstemperatur der Vorrichtung ohne entsprechende Gegenmaßnahmen wie eine Kühlung des Filters an. Bei Temperaturen unterhalb der Zündtemperatur sind die entsprechenden Wärmeverluste größer als die freigesetzte Regenerationswärme. Zur Aufrechterhaltung der Regeneration kann hierbei sowohl eine kontinuierliche als auch eine intervallartige Erwärmung mittels der bzw. den Heizvorrichtungen vorgesehen werden.

Dadurch dass die Ist-Temperatur kleiner als die Zündtemperatur der Vorrichtung ist und somit die Ist-Temperatur ohne zusätzlicher Wärmeinput sinken würde, kann eine vergleichsweise aufwändige Kühlvorrichtung entfallen. Dies führt zu einer deutlichen Reduzierung des konstruktiven Aufwands der Regelung. Das Einkoppeln der zur Aufrechterhaltung einer vergleichsweise schnell ablaufenden Regeneration des Partikelfilters notwendigen Zuheizenergie erfolgt in vorteilhafter Weise wenigstens teilweise mit der bereits vorhandenen Heizvorrichtung.

Grundsätzlich ist es von Vorteil, die Ist-Temperatur mit einem vorgegebenen Abstand unterhalb der Zündtemperatur einzuregeln, d.h. die vorgegebene Soll-Temperatur ist etwas kleiner als die Zündtemperatur. Ein entsprechender Abstand gewährleistet, dass möglicherweise auftretende lokale Temperaturunterschiede bzw. -erhöhungen im Partikelfilter an keiner Stelle des Filters zu einer Überschreitung der Zündtemperatur führen kann. Mit Hilfe dieser Maßnahme kann gegebenenfalls eine vergleichsweise kleinräumige Ermittlung und Regelung der Temperaturverteilung des Partikelfilters entfallen bzw. der Aufwand hierfür wesentlich verringert werden.

In vorteilhafter Weise ist der Abstand der Ist-Temperatur zur Zündtemperatur zu minimieren, so dass die aus der Regenerationsreaktion stammende thermische Energie als wesentlicher Anteil zum Aufrechterhalten der Regeneration verwendet wird. Hiermit wird die notwendige Zuheizung des Partikelfilters während der Regeneration mittels der Heizvorrichtung vorteilhaft minimierbar, was zu einer deutlichen Einsparung an entsprechender Zuheizenergie führen kann.

Die Zuheizenergie kann mittels einer Zudosierung von Brennstoff, insbesondere von Kraftstoff der Verbrennungseinrichtung, mittels einem offenen bzw. einem katalytischen Brenner, einer elektrischen Heizvorrichtung, innermotorischer Maßnahmen und/oder dergleichen aufgebracht werden. Hierbei kann die Zuheizung sowohl parallel oder direkt zum bzw. in den Abgasstrom und/oder Partikelfilter erfolgen. Gegebenenfalls kann hierbei ein Wärmetauscher in vorteilhafter Weise vorgesehen werden.

Vorzugsweise umfasst die Regeleinheit eine Auswerteeinheit zur Ermittlung der Temperatur des Partikelfilters und/oder einer Heizleistung der bereits vorhandenen und/oder zusätzlichen Heizvorrichtung. Mit Hilfe einer entsprechenden Auswerteeinheit, die insbesondere wenigstens einen Sensor zur direkten oder indirekten Ermittlung der Temperatur des Partikelfilters umfasst, kann vor allem die Ist-Temperatur bzw. die Temperaturverteilung im Filter während der Regeneration möglichst genau ermittelt werden, wobei dies in vorteilhafter Weise zur Regelung der Ist-Temperatur mittels der entsprechenden Heizvorrichtung zu verwenden ist.

Gegebenenfalls können mehrere, räumlich getrennte Sensoren zur Realisierung mehrerer, einzeln regelbarer Regelkreise vorgesehen werden. Hiermit kann gegebenenfalls eine exakte, lokal unterschiedliche Temperaturverteilung des Partikelfilters ermittelt und derart geregelt werden, dass der Partikelfilter eine nahezu homogene Temperaturverteilung aufweist. Hierdurch kann erreicht werden, dass die Ist-Temperatur selbst in kleineren Bereichen des Partikelfilters die Zündtemperatur der Vorrichtung nicht überschreitet, was zu einer verbesserten Betriebsweise der Vorrichtung und deutlichen Erhöhung der Betriebssicherheit führen kann.

Darüber hinaus kann mittels einer entsprechenden Auswerteeinheit die Heizleistung der Heizvorrichtung bzw. Heizvorrichtungen ermittelt werden, wobei beispielsweise nach Abschluss der Regeneration, d.h. nach der Umsetzung der im Partikelfilter abgelagerten Partikel, die chemische Heizleistung verringert wird, was dazu führt, dass bei vorgegebener, nahezu konstant eingeregelter Ist-Temperatur des Partikelfilters die Heizleistung der Heizvorrichtung ansteigt.

Vorzugsweise wird dieser Anstieg der Heizleistung der Heizvorrichtung zur Bestimmung des Endes der Regeneration mittels der Auswerteeinheit verwendet.

In einer besonderen Variante der Erfindung umfasst der Partikelfilter wenigstens ein Heizelement. Mit Hilfe dieser Maßnahme wird eine direkte, verlustarme Einbringung der Zuheizenergie mittels der bereits vorhandenen Heizvorrichtung und/oder mittels der weiteren, zusätzlichen Heizvorrichtung realisierbar.

Möglicherweise können ein oder mehrere Heizelemente nahezu gleichmäßig verteilt im Partikelfilter angeordnet werden, so dass eine vorteilhaft homogene bzw. homogenisierende Zuheizung realisierbar ist. Hierdurch können gegebenenfalls nachteilige, vergleichsweise große Temperaturunterschiede des Partikelfilters vermieden bzw. ausgeglichen werden.

Vorteilhafterweise ist das Heizelement wenigstens in einem der Strömungsrichtung des Abgases zugewandten Bereich des Partikelfilters angeordnet. Mit Hilfe dieser Maßnahme kann beispielsweise die Temperatur des Partikelfilters auf die vorgegebene Soll-Temperatur zur Einleitung der Regenerationsphase im entsprechenden Bereich des Partikelfilters angehoben werden. Aufgrund der Zuheizenergie sowie der aus der Regenationsreaktion stammenden Energie wird hierbei in vorteilhafter Weise mittels der Strömung des Abgases der gesamte Partikelfilter erwärmbar. Hiermit kann der konstruktive Aufwand der erfindungsgemäßen Vorrichtung reduziert werden. Gegebenenfalls kann der nichtbeheizbare Teil des Partikelfilters als gewöhnlicher Filter ausgeführt werden, der in Strömungsrichtung unmittelbar hinter einem beheizbaren Filter anzuordnen ist.

Vorteilhafterweise ist das Heizelement als elektrisches Heizelement ausgebildet, wodurch der Einsatz von handelsüblichen Komponenten möglich ist. Hierdurch kann eine vergleichsweise kostengünstige Vorrichtung realisiert werden. Darüber hinaus kann mittels einer entsprechenden elektrischen Heizvorrichtung eine vergleichsweise einfache Regelung der Ist-Temperatur des Partikelfilters und/oder der Ermittlung der Heizleistung dieser Heizvorrichtung realisiert werden.

Vorzugsweise ist das Heizelement als Heizleiter ausgebildet. Gegebenenfalls kann ein entsprechender Heizleiter bzw. Heizdraht im oder am Partikelfilter angebracht werden. Beispielsweise kann der Heizleiter als Wicklung, Heizleiterstruktur wie ein Heiznetz, Heizgeflecht, usw. ausgebildet werden.

Vor allem alternativ hierzu ist das Heizelement als beheizbarer Werkstoff des Partikelfilters ausgebildet. Mit Hilfe dieser Maßnahme wird eine vorteilhafte innere Erwärmung des Partikelfilters realisierbar. Gegebenenfalls ist der beheizbare Werkstoff als elektrisch leitfähiger Werkstoff ausgebildet, so dass die Erwärmung des Partikelfilters mit Hilfe einer elektrischen Strom- bzw. Spannungsquelle und ohne vergleichsweise großem Aufwand realisierbar ist.

In einer besonderen Weiterbildung der Erfindung besteht der Partikelfilter aus dem beheizbaren und wenigstens einem weiteren, zweiten Werkstoff. Vorzugsweise wird als zweiter Werkstoff ein vergleichsweise gut filtrierender Werkstoff verwendet. Darüber hinaus kann in vorteilhafter Weise ein elektrischer Isolator als zweiter Werkstoff vorgesehen werden, der zugleich gute strukturelle Eigenschaften bezüglich der Partikelfiltrierung aufweist. Beispielsweise wird als zweiter Werkstoff ein keramischer, poröser Werkstoff wie Aluminiumoxid oder dergleichen verwendet. Hierdurch kann auf bewährte Werkstoffe zur Partikelfiltration zurückgegriffen werden.

Vorzugsweise kann der beheizbare Werkstoff als funktioneller Bestandteil des Partikelfilters in Form einer elektrisch leitfähigen Perkulationsstruktur oder dergleichen auf dem zweiten, elektrisch isolierenden Werkstoff bzw. porösen Filterkörper aufgebracht werden. Beispielsweise können als elektrisch leitfähiger Werkstoff verschiedene Metalle bzw. Metalllegierungen, Halbleiterwerkstoffe oder dergleichen wie Siliziumkarbid eingesetzt werden.

In einer vorteilhaften Ausführungsform der Erfindung ändert sich in Abhängigkeit der Temperatur ein elektrischer Widerstand des Heizelementes. Hierdurch wird ermöglicht, dass das Heizelement zugleich als Regelelement der Regeleinheit zu verwenden ist, was insbesondere den Aufwand der elektronischen Regelung deutlich verringert. Grundsätzlich ist hierbei eine vergleichsweise große Änderung des elektrischen Widerstands bei einer vergleichsweise kleinen Änderung der Temperatur des Partikelfilters, d.h. ein vergleichsweise großer Temperaturkoeffizient des Werkstoffs, von Vorteil.

In vorteilhafter Weise kann vor allem mit einem vergleichsweise großen Temperaturkoeffizienten des Werkstoffs erreicht werden, dass die elektrische Heizleistung umgekehrt proportional zur Ist-Temperatur bzw. Ist-Temperatur kleinerer Bereiche des Partikelfilters ist. Dies kann eine relativ gute, räumlich differenzierte Selbstregulation des Partikelfilters ermöglichen.

Einerseits kann ein Heizelement aus entsprechendem Werkstoff mit einem positiven Temperaturkoeffizienten, d.h. der elektrische Widerstand steigt mit zunehmender Temperatur an, beispielsweise an eine Spannungsquelle angeschlossen werden, so dass dessen Heizleistung mit steigender Temperatur abfällt. Ein Partikelfilter mit einem entsprechenden Heizelement, der an eine Spannungsquelle angeschlossen ist, wird somit in den relativ kühlen Bereichen des Partikelfilters mehr Heizleistung deponieren als in den relativ warmen Bereichen des Partikelfilters.

Eine lokale Temperaturerhöhung durch eine Wärmequelle, z.B. eine räumlich beschränkte, höhere Reaktionsgeschwindigkeit, d.h. höhere thermische Energie aufgrund der Regenerationsreaktion, wird durch eine verringerte elektrische Heizleistung in diesem Bereich mindestens teilweise kompensiert. Entsprechende Werkstoffe mit einem positiven Temperaturkoeffizienten stellen Metalle oder dergleichen dar.

Anderseits kann ein Heizelement aus einem Werkstoff mit negativem Temperaturkoeffizient, d.h. der elektrische Widerstand steigt mit abnehmender Temperatur an, eine entsprechende Selbstregulierung durch das Anlegen einer Stromquelle realisieren. Hierbei werden entlang des Strompfades die kühleren Bereiche des Partikelfilters stärker elektrisch beheizt als die wärmeren Bereiche. Vor allem Halbleiterwerkstoffe oder dergleichen weisen einen negativen Temperaturkoeffizienten mit vergleichsweise großem Betrag auf.

Generell kann der mittlere Widerstand der entsprechenden Heizvorrichtung mittels einer Aufnahme des Spannungs- bzw. Stromverlaufes während der Regeneration ermittelt werden. Hierbei ist vor allem der elektrische Widerstand aufgrund der Temperaturabhängigkeit zugleich ein Maß für die mittlere innere Ist-Temperatur des Filters. Demzufolge ist es möglich, neben einer konstanten Spannungs- oder Stromregelung den Widerstand der Heizvorrichtung während der Regeneration auf einen bestimmten Wert einzuregeln. Zusätzlich kann die zugeführte elektrische Heizleistung mit Hilfe des Spannungs- und Stromverlaufes ermittelt werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Fig. 1: ein Blockschaltbild einer erfindungsgemäßen Vorrichtung,
- Fig. 2: ein prinzipieller, schematischer Aufbau eines Partikelfilters,
- Fig. 3: eine schematische Detailansicht des Partikelfilters gemäß Fig. 2,
- Fig. 4: eine schematische Anordnung zur Beheizung eines Partikelfilters mit einem Werkstoff mit positivem Temperaturkoeffizienten,
- Fig. 5: einen schematischen Verlauf der Heizleistung sowie des Widerstandes eines Werkstoffs mit positivem Temperaturkoeffizienten in Abhängigkeit der Temperatur,
- Fig. 6: eine schematische Anordnung zur Beheizung eines Partikelfilters mit einem Werkstoff mit negativem Temperaturkoeffizienten und
- Fig. 7: einen schematischen Verlauf der Heizleistung eines Werkstoffs mit negativem Temperaturkoeffizienten in Abhängigkeit der Temperatur.

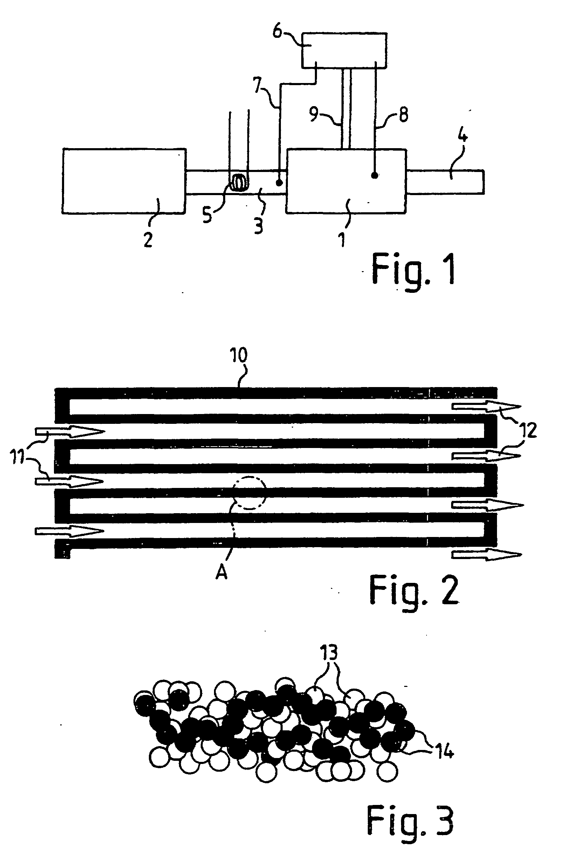

Das in Fig. 1 dargestellte Blockschaltbild der erfindungsgemäßen Vorrichtung zeigt einen Partikelfilter 1, dem ein von einer Verbrennungsmaschine 2, insbesondere Brennkraftmaschine, erzeugtes Rohabgas 3 zuströmt und der ein gereinigtes Abgas 4 abgibt.

Das Rohabgas 3 wird mittels einer Heizung 5 während der Regenerationsphase zur Bereitstellung einer notwendigen Arbeitstemperatur erwärmt. Zur Erhöhung der Temperatur des Rohabgases 3 können auch andere bekannte Maßnahmen wie innermotorische Maßnahmen bei Verbrennungskraftmaschinen, katalytische Zuheizungen oder dergleichen vorgesehen werden.

Hierbei muss jedoch darauf geachtet werden, dass die Temperatur des einströmenden Regenerationsgases 3 nicht die Temperatur des Filters 1 über den Zündpunkt des Filters 1 anhebt. Hierfür ist unter anderem ein Sensor 7 zur Messung der Temperatur des Rohabgases 3 sowie ein Sensor 8 zur Messung der Filtertemperatur vorgesehen. Die beiden Sensoren 7, 8 sind vor allem mit einer Regelung 6 zur Regelung bzw. Steuerung des Partikelfilters 1 verbunden.

Zur Erwärmung des Partikelfilters 1 umfasst dieser in vorteilhafter Weise eine weitere, zweite in Fig. 1 nicht näher dargestellte Heizung. In Fig. 1 ist hierzu lediglich eine Verbindung 9 zwischen der Regelung 6 und dem Partikelfilter 1 dargestellt. Hiermit wird der Partikelfilter 1 mit geregelter Spannung, Strom und/oder Widerstand versorgt.

In Fig. 2 ist ein Filterkörper 10 dargestellt, wobei ein Zustrom 11 dem Filterkörper 10 zuströmt und ein gereinigter Abstrom 12 aus dem Filterkörper 10 abströmt. Der Zustrom 11 wird gegebenenfalls während der Regenerationsphase vorgewärmt und mittels einer nicht näher dargestellten Heizung bis zur vorgegebenen Ist-Temperatur, die kleiner als die Zündtemperatur des Partikelfilters 1 ist, erwärmt.

Diese Erwärmung des Filterkörpers 10 auf die Ist-Temperatur gemäß der Erfindung kann beispielsweise mittels in den Filterkörper 10 eingearbeiteter Heizleiterelemente erfolgen und/oder eines funktionellen Bestandteils des Filterkörpers 10 gemäß Fig. 3 realisiert werden.

Fig. 3 zeigt eine schematische Detaildarstellung eines Ausschnitts A gemäß Fig. 2. Hierbei sind zwei Filterbestandteile 13, 14 des porösen Filterkörpers 10 verdeutlicht, wobei mindestens ein Filterbestandteil 14 elektrisch leitfähig ist und eine elektrisch leitfähige Perkulationsstruktur ausbildet. Der Filterbestandteil 14 kann beispielsweise ein Metall, Halbleiter oder dergleichen wie Siliziumkarbid sein.

Der Filterbestandteil 13 ist insbesondere ein elektrischer Isolator, z.B. eine Keramik oder dergleichen wie Aluminiumoxid oder dergleichen.

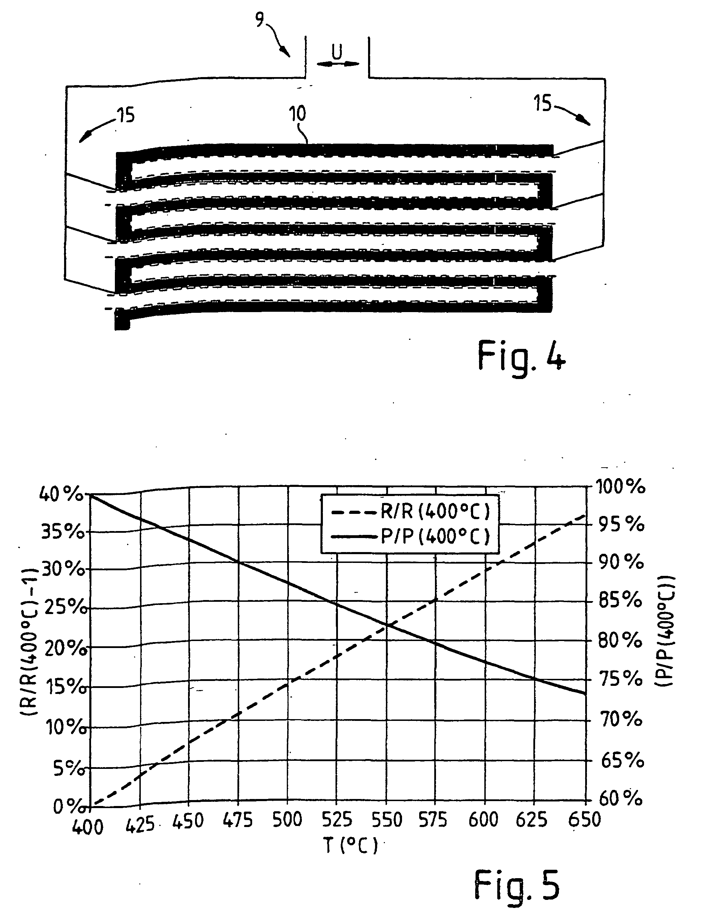

In Fig. 4 ist schematisch ein Filterkörper 10 mit einer nicht näher dargestellten Heizung, gegebenenfalls mit einer elektrisch leitfähigen Perkulationsstruktur gemäß Fig. 3, dargestellt. Hierbei wird die Heizenergie mittels einer geregelten Spannung U und einer Kontaktierung 15 in den Filterkörper 10 eingebracht. In diesem Fall handelt es sich vorzugsweise um einen Filterbestandteil 14 mit positivem Temperaturkoeffizienten, z.B. Metalle oder dergleichen, gemäß Fig. 5.

In Fig. 5 ist der Verlauf eines normierten Widerstands R/R(400°C) in Abhängigkeit der Temperatur T als punktierte Linie dargestellt. Hierbei wird ersichtlich, dass der Widerstand R mit zunehmender Temperatur T steigt. Weiterhin ist in Fig. 5 die relative Heizleistung P/P(400°C) in Abhängigkeit der Temperatur T als durchgehende Linie dargestellt.

Wird beispielsweise ein entsprechender Widerstand R an eine Spannungsquelle mit konstanter Spannung U angeschlossen, so fällt dessen Heizleistung P gemäß Fig. 5 mit steigender Temperatur T ab. So wird ein entsprechender Filter 1 in den kühleren Bereichen mehr Heizleistung P umsetzen als in wärmeren Bereichen des Filters 1. Eine lokale Temperaturerhöhung, beispielsweise durch eine Wärmequelle, z.B. eine räumlich beschränkte, höhere Reaktionsgeschwindigkeit der Regeneration aufgrund vermehrter Rußablagerung oder dergleichen, wird durch eine verringerte, elektrische Heizleistung P in diesem Bereich mindestens teilweise kompensiert.

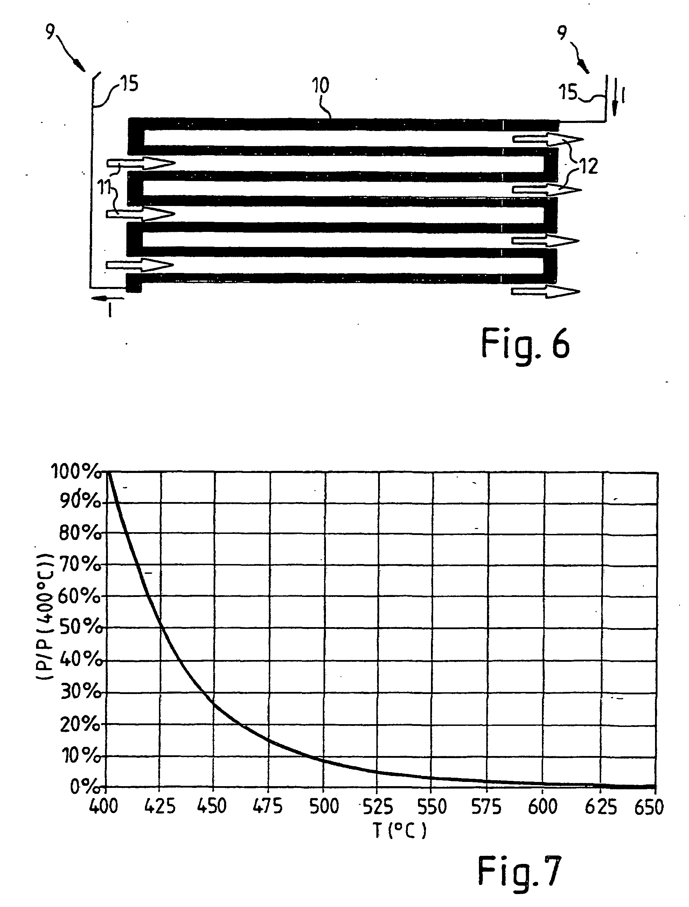

In Fig. 6 ist ein Filterkörper 10 mit einer Kontaktierung 15 dargestellt, wobei ein konstanter Strom I den Filterkörper 10 durchfließt. Hierbei wird zur Regelung der Ist-Temperatur des Filterkörpers 10 beispielsweise ein elektrisch leitfähiger Filterbestandteil 14 mit negativen Temperaturkoeffizienten verwendet. Der Filterbestandteil 14 weist beispielsweise einen Verlauf der relativen Heizleistung P/P(400°C) in Abhängigkeit der Temperatur T gemäß Fig. 7 auf, wobei die Änderung des normierten Widerstandes R/R(400°C) nicht näher dargestellt ist. Letzterer fällt mit zunehmender Temperatur T nicht linear ab. Beispielsweise bei Halbleitern kann der Betrag des negativen Temperaturkoeffizienten erheblich größer sein als der Betrag des positiven Temperaturkoeffizienten wie beispielsweise bei Metall oder dergleichen.

Grundsätzlich ist ein höherer Betrag des Temperaturkoeffizienten vorteilhaft, da dieser Temperaturunterschiede des Filterkörpers 10 stärker ausgleichen kann als Werkstoffe mit einem geringen Betrag des Temperaturkoeffizienten.

Mit Hilfe einem Filterkörper 10 gemäß Fig. 6 kann eine vorteilhafte Selbstregulierung durch das Anlegen einer Stromquelle mit konstantem Strom I erfolgen. Entlang des Strompfades werden wiederum die kühleren Bereiche des Filterkörpers 10 stärker geheizt als die wärmeren Bereiche des Filterkörpers 10.

Vorzugsweise kann die Spannung U und der Strom I während der Regenerationsphase aufgenommen werden, so dass ein mittlerer Widerstand R der Heizung des Filters 10 und die zugeführte elektrische Heizleistung errechnet werden können. Der Widerstand R ist aufgrund der bekannten Abhängigkeit von der Temperatur T auch ein Maß für die mittlere innere Filtertemperatur T. Demzufolge kann neben einer konstanten Spannungs- oder Stromregelung der Widerstand R der Heizung des Filterkörpers 10 während der Regenerationsphase auf einen bestimmten, vorgegebenen Wert eingeregelt werden.

Eine weitere erfindungsgemäße Variante verwendet die Ermittlung der Heizleistung P als Regelgröße. Ist die Regenerationsphase abgeschlossen, so fällt die chemische Verbrennungsleistung der Regenerationsreaktion ab. Zur Aufrechterhaltung der Ist-Temperatur gemäß der Erfindung, d.h. der Ist-Temperatur T des Filterkörpers 10, muss die zuzuführende Heizleistung P entsprechend ansteigen. Demzufolge kann das Ende der Regeneration über den Anstieg der elektrischen Heizleistung P detektiert werden.

Aufgrund der erfindungsgemäßen Regelung des Filters 1 bzw. 10 kann dieser im Unterschied zum Stand der Technik nahezu vollständig mit Ruß oder dergleichen belegt sein, da lokale Überhitzungen aufgrund der Regelung, beispielsweise mittels eines Filterbestandteils 14, zuverlässig verhindert wird. Hierdurch wird die Sicherheit der gesamten Vorrichtung entscheidend erhöht.

Aufgrund dessen, dass der Filter 1 bzw. 10 voll beladen werden kann, kann der Abstand zwischen den Regenerationsphasen deutlich erhöht werden, wodurch gegebenenfalls aufzubringende Heizenergie P zur Durchführung der Regeneration über einen längren Zeitraum betrachtet reduziert werden kann.

## Patentansprüche

1. Vorrichtung zur Abgasbehandlung einer Verbrennungseinrichtung (2), insbesondere einer Dieselbrennkraftmaschine (2), mit wenigstens einer Heizvorrichtung (5) zur Erwärmung eines Partikelfilters (1), wobei eine chemische Regeneration des Partikelfilters (1) vorgesehen ist und wobei eine Regeleinheit (6) zur Regelung einer Ist-Temperatur des Partikelfilters (1) wenigstens während der Regeneration vorgesehen ist, **dadurch gekennzeichnet, dass** die Ist-Temperatur kleiner als eine Zündtemperatur der Vorrichtung ist.

2. Vorrichtung nach Anspruch 1, **dadurch gekennzeichnet, dass** die Regeleinheit (6) eine Auswerteeinheit zur Ermittlung der Temperatur des Partikelfilters und/oder einer Heizleistung (P) der Heizvorrichtung (5) umfasst.

3. Vorrichtung nach einem der vorgenannten Ansprüche, **dadurch gekennzeichnet, dass** der Partikelfilter (1) wenigstens ein Heizelement (14) umfasst.

4. Vorrichtung nach einem der vorgenannten Ansprüche, **dadurch gekennzeichnet, dass** das Heizelement (14) wenigstens in einem der Strömungsrichtung des Abgases (3) zugewandten Bereich des Partikelfilters (1) angeordnet ist.

5. Vorrichtung nach einem der vorgenannten Ansprüche, **dadurch gekennzeichnet, dass** das Heizelement (14) als elektrisches Heizelement ausgebildet ist.

6. Vorrichtung nach einem der vorgenannten Ansprüche, **dadurch gekennzeichnet, dass** das Heizelement (14) als Heizleiter ausgebildet ist.

7. Vorrichtung nach einem der vorgenannten Ansprüche, **dadurch gekennzeichnet, dass** das Heizelement (14) als beheizbarer Werkstoff des Partikelfilters (1) ausgebildet ist.

8. Vorrichtung nach einem der vorgenannten Ansprüche, **dadurch gekennzeichnet, dass** der Partikelfilter (1) aus dem beheizbaren und wenigstens einem weiteren, zweiten Werkstoff besteht.

9. Vorrichtung nach einem der vorgenannten Ansprüche, **dadurch gekennzeichnet, dass** ein elektrischer Widerstand (R) des Heizelementes (14) sich in Abhängigkeit der Temperatur ändert.

10. Verfahren zur Abgasbehandlung einer Brennkraftmaschine (2), insbesondere einer Dieselbrennkraftmaschine (2), mit wenigstens einer Heizvorrichtung (5) zur Erwärmung eines Partikelfilters (1), wobei eine chemische Regeneration des Partikelfilters (1) vorgesehen ist, **dadurch gekennzeichnet, dass** eine Vorrichtung nach einem der vorgenannten Ansprüche zur Regelung einer Ist-Temperatur des Partikelfilters (1) wenigstens während der Regeneration verwendet wird.

## Claims

1. Device for treating the exhaust gas of a combustion device (2), in particular of a diesel internal combustion engine (2) having at least one heating device (5) for heating a particle filter (1), wherein a chemical regeneration of the particle filter (1) is provided and wherein a control unit (6) is provided for controlling an actual temperature of the particle filter (1) at least during the regeneration, **characterized in that** the actual temperature is lower than an ignition temperature of the device.

2. Device according to Claim 1, **characterized in that** the control unit (6) comprises an evaluation unit for determining the temperature of the particle filter and/or a calorific output (P) of the heating device (5).

3. Device according to one of the preceding claims, **characterized in that** the particle filter (1) comprises at least one heating element (14).

4. Device according to one of the preceding claims, **characterized in that** the heating element (14) is arranged at least in a region of the particle filter (1) facing the direction of flow of the exhaust gas (3).

5. Device according to one of the preceding claims, **characterized in that** the heating element (14) is embodied as an electric heating element.

6. Device according to one of the preceding claims, **characterized in that** the heating element (14) is embodied as a heat conductor.

7. Device according to one of the preceding claims, **characterized in that** the heating element (14) is embodied as a heatable material of the particle filter (1).

8. Device according to one of the preceding claims, **characterized in that** the particle filter (1) is composed of the heatable material and at least one further, second material.

9. Device according to one of the preceding claims, **characterized in that** an electrical resistance (R) of the heating element (14) changes as a function of the temperature.

10. Method for treating the exhaust gas of an internal combustion engine (2), in particular of a diesel internal combustion engine (2), having at least one heating device (5) for heating a particle filter (1), wherein a chemical regeneration of the particle filter (1) is provided, **characterized in that** a device according to one of the preceding claims is used for controlling an actual temperature of the particle filter (1) at least during the regeneration.

## Revendications

1. Dispositif pour traiter les gaz d'échappement d'une installation de combustion (2), en particulier d'un moteur Diesel à combustion interne (2), comportant au moins un dispositif de chauffage (5) pour chauffer un filtre à particules (1), chimiquement régénéré et une unité de régulation (6) de la température réelle du filtre à particules (1) au moins pendant la régénération,
**caractérisé en ce que**
la température réelle est inférieure à une température d'allumage du dispositif.

2. Dispositif selon la revendication 1,
**caractérisé en ce que**
l'unité de régulation (6) comprend une unité d'exploitation pour déterminer la température du filtre à particules et/ou une puissance de chauffage (P) du dispositif de chauffage (5).

3. Dispositif selon l'une des revendications précédentes,
**caractérisé en ce que**
le filtre à particules (1) comprend au moins un élément chauffant (14).

4. Dispositif selon l'une des revendications précédentes,
**caractérisé en ce que**
l'élément chauffant (14) est au moins placé dans une zone du filtre à particules (1) orientée dans la direction d'écoulement du gaz d'échappement.

5. Dispositif selon l'une des revendications précédentes,
**caractérisé en ce que**
l'élément chauffant (14) est un élément chauffant électrique.

6. Dispositif selon l'une des revendications précédentes,
**caractérisé en ce que**
l'élément chauffant (14) est un conducteur de chaleur.

7. Dispositif selon l'une des revendications précédentes,
**caractérisé en ce que**
l'élément chauffant (14) est un matériau chauffable du filtre à particules (1).

8. Dispositif selon l'une des revendications précédentes,
**caractérisé en ce que**
le filtre à particules (1) est constitué du matériau chauffable et d'au moins un deuxième matériau différent.

9. Dispositif selon l'une des revendications précédentes,
**caractérisé en ce qu'**
une résistance (R) électrique de l'élément chauffant (14) change en fonction de la température.

10. Procédé pour traiter les gaz d'échappement d'une installation de combustion (2), en particulier d'un moteur Diesel à combustion interne (2), comportant au moins un dispositif de chauffage (5) pour chauffer un filtre à particules (1), le filtre à particules (1) étant chimiquement régénéré,
**caractérisé en ce qu'**
au moins pendant la régénération, on utilise un dispositif selon l'une des revendications précédentes pour réguler une température réelle du filtre à particules (1).
